# EUROPÄISCHE PATENTSCHRIFT

(11) **EP 4 089 044 B1**
(45) Veröffentlichungstag und Bekanntmachung des Hinweises auf die Patenterteilung: **10.07.2024**
(21) Anmeldenummer: 22171610.3
(22) Anmeldetag: 04.05.2022
(51) Int. Cl.: B66C 23/36, B60P 1/54, B62D 21/02

(54) **ANORDNUNG ZUR MONTAGE EINES KRANS AN EINEM FAHRZEUG**
METHOD FOR INSTALLING A CRANE ON A VEHICLE
AGENCEMENT DE MONTAGE D'UNE GRUE SUR UN VÉHICULE

(30) Priorität: 12.05.2021 DE 102021112470
(43) Veröffentlichungstag der Anmeldung: 16.11.2022
(73) Patentinhaber: Franz Xaver Meiller Fahrzeug- und Maschinenfabrik - GmbH & Co KG, 80997 München (DE)
(72) Erfinder: HOFMANN, Maximilian, 84184 Tiefenbach (DE); DORNAUER, Karl, 81371 München (DE)
(74) Vertreter: Weickmann & Weickmann PartmbB

(56) Entgegenhaltungen:
- EP-A1- 1 481 877
- EP-A1- 3 069 925
- DE-A1- 102009 047 458
- DE-A1- 19 625 380
- FR-A1- 2 853 296

## Beschreibung

Die vorliegende Erfindung betrifft eine Anordnung zur Montage eines Krans an einem Fahrzeug mit einem Fahrgestell, ein Fahrzeug, welches eine derartige Anordnung umfasst, sowie ein Verfahren zum Montieren eines Krans an einem derartigen Fahrzeug.

Es sind verschiedene Typen von Fahrzeugen bekannt, die als Aufbau einen Kran umfassen, welcher zum Handhaben von schweren Lasten im Bereich des Fahrzeugs eingesetzt werden kann, beispielsweise Kipperfahrzeuge, bei denen zwischen dem Führerhaus und dem Kippaufbau ein derartiger Kran zum Be- und Entladen der Ladefläche installiert ist.

In bereits bekannten Typen von Fahrzeugen wird beidseitig an der Außenseite eines Hilfsrahmens eine jeweilige Kranseitenplatte angeschweißt, an die wiederum individuell Bridenrollen oder Bridentaschen zur Aufnahme der Kranbriden angeschweißt werden. Dies führt unweigerlich zur einer Zerstörung der Lackoberfläche am Hilfsrahmen während des Vorgangs des Anschweißens der Kranseitenplatten daran, was aufwendige Nacharbeiten notwendig macht und zu einer erhöhten Korrosionsanfälligkeit führen kann. Weiterhin findet in derartigen bekannten Anordnungen eine Verklotzung des Krans durch ein Nut-Federsystem an der Außenseite der Kranseitenplatte statt, was ebenfalls einen erhöhten Montageaufwand mit sich bringt und eine Zerstörung der Lackoberfläche am Ladekran beim Anschweißen des Federblechs zur Verklotzung hervorrufen kann.

In diesem Zusammenhang ist ebenfalls beispielsweise aus der EP 2 085 295 B1 bekannt, zur Installation eines derartigen Krans einen Hilfsrahmen einzusetzen, welcher Krankonsolen umfasst. In der in dieser Druckschrift gezeigten Anordnung sind jedoch weder eine Vorrüstung noch eine Schnittstelle zur Verklotzung des Krans vorgesehen, so dass in dieser Hinsicht noch Verbesserungspotential besteht.

Insbesondere hat es sich gezeigt, dass das Durchführen von nachträglichen Schweißarbeiten am Hilfsrahmen und auch dem Kran selbst bei der Montage nachteilhaft ist, da einerseits nach derartigen Schweißarbeiten häufig noch Nachbearbeitungen von Oberflächen notwendig sind und andererseits die Kranmontagezeit relativ hoch ist. In diesem Zusammenhang kann ebenfalls eine qualitative Verbesserung des Korrosionsschutzes im Bereich der Montage des Krans an das Fahrzeug durch eine Fertigung sowohl des Hilfsrahmens als auch des Ladekrans selbst bis zur Endlackierung gewünscht sein.

In diesem Zusammenhang sei beispielsweise auf die DE 10 2009 047 458 A1 verwiesen, welche ebenfalls eine Anordnung zur Montage eines Krans an einem Fahrzeug offenbart. Dieses Dokument offenbart die Merkmale des Oberbegriffs von Anspruch 1.

Aus Gründen der Vollständigkeit sollen ferner die DE 196 25 380 A1 und die EP 1 481 877 A1 genannt sein, welche jeweils Rahmenstrukturen von Fahrzeugen betreffen.

Um nun die bekannten Anordnungen zur Montage eines Krans an einem Fahrzeug mit einem Fahrgestell zu verbessern, insbesondere hinsichtlich der oben explizit genannten Nachteile, wird erfindungsgemäß eine derartige Anordnung vorgeschlagen, umfassend einen Hilfsrahmen, welcher eine Längsrichtung der Anordnung sowie eine dazu senkrechte Breitenrichtung definiert und zwei Längsträger umfasst, welche wiederum jeweils einen Seitenabschnitt und einen Obergurt umfassen und dazu eingerichtet sind, sich im Wesentlichen entlang einer Längsrichtung des Fahrzeugs zu erstrecken, zwei Kran-Seitenplatten, welche jeweils dazu eingerichtet sind, mit einem der Längsträger und ggf. zusätzlich dem Fahrgestell verbunden zu sein, und wenigstens zwei Bridentaschen zum Montieren von Kranbriden des Krans umfassen, wobei die Seitenabschnitte der Längsträger des Hilfsrahmens und die Kran-Seitenplatten jeweilige Lochmuster umfassen, mittels welcher ein Anschrauben der Kran-Seitenplatten an den Längsträgern an einer Mehrzahl von Positionen ermöglicht ist, und wenigstens einen Querträger zur Verklotzung des Krans, welcher zu diesem Zweck an seiner Oberseite mit wenigstens einer Nut versehen ist, die zur Aufnahme von wenigstens einem an dem Kran bereitgestellten Gegenelement versehen ist, wobei die Obergurte der Längsträger des Hilfsrahmens und der wenigstens eine Querträger jeweilige Lochmuster umfassen, mittels welcher ein Anschrauben des wenigstens einen Querträgers an den Längsträgern an einer Mehrzahl von Positionen ermöglicht ist.

Mit der eben beschriebenen erfindungsgemäßen Anordnung wird es ermöglicht, den Hilfsrahmen bis zu seiner Endlackierung ohne eine vorherige Montage des Krans fertigzustellen. Insbesondere sind keine nachträglichen lackbeschädigenden Montagearbeiten mehr notwendig, was zur Verbesserung des Korrosionsschutzes sowohl am zu installierenden Ladekran als auch an dem Hilfsrahmen selbst beiträgt. Weiterhin wird die Montagezeit des Krans insgesamt verkürzt und durch das Vorsehen der Lochmuster und der dadurch möglichen variablen Positionierung ist eine Montage einer Vielzahl von Typen von Kränen möglich, da die Positionierung verschiedener der Komponenten der erfindungsgemäßen Anordnung, wie beispielsweise der Kran-Seitenplatten und des wenigstens einen Querträgers, auf unterschiedliche Krantypen abstimmbar ist.

Erfindungsgemäß ist wenigstens eine der Kran-Seitenplatten mehrteilig ausgebildet sein, wobei dann jeder der Teile wenigstens eine der Bridentaschen umfasst. Auf diese Weise wird die Flexibilität der erfindungsgemäßen Anordnung weiter erhöht und es kann beispielsweise zwischen den mehreren Teilen der Kran-Seitenplatten ein freier Abschnitt entlang des Hilfsrahmens vorgesehen sein, sofern dies beispielsweise zur Installation externer Komponenten notwendig oder gewünscht ist.

Wenngleich prinzipiell beliebige Lochmuster sowohl für den Hilfsrahmen als auch die Kran-Seitenplatten und den wenigstens einen Querträger vorgesehen werden können, solange diese eine geeignete Montage und Positionierung der entsprechenden Komponenten in einer geometrischen Ausrichtung zueinander ermöglichen, in welcher eine letztliche Montage eines Krans durchführbar ist, so können in einer besonders bevorzugten Ausführungsform die Lochmuster der Obergurte des Hilfsrahmens jeweils wenigstens zwei im Wesentlichen in der Längsrichtung der Anordnung parallel zueinander verlaufende und versetzt angeordnete Reihen von Löchern umfassen, und der wenigstens eine Querträger an beiden Seiten wenigstens zwei auf die Reihen abgestimmte Lochgruppen derart umfassen, dass die entsprechenden Löcher parallel und bezüglich der Längsrichtung der Anordnung zueinander ausgerichtet sind.

Indem auf diese Weise hinsichtlich der Breitenrichtung des Hilfsrahmens zwei unabhängige, versetzt zueinander angeordnete Reihen von Löchern bereitgestellt sind und der wenigstens eine Querträger ebenfalls mit entsprechenden Lochgruppen versehen ist, kann eine weiter erhöhte Granularität der Montagepositionen des Querträgers erzielt werden, indem dieser jeweils entweder an der in Breitenrichtung äußeren oder inneren Reihe von Löchern angeschraubt wird.

Insbesondere können hierbei in den Obergurten zwei Reihen von Löchern vorgesehen sein, wobei die Löcher der einen Reihe jeweils mittig zwischen den Löchern der anderen Reihe angeordnet sind, was eine gleichmäßige Beabstandung der einzelnen möglichen Montagepositionen des wenigstens einen Querträgers in Längsrichtung des Hilfsrahmens ermöglicht.

Als weitere Maßnahme zur Erhöhung der Anzahl möglicher Montagepositionen kann der wenigstens eine Querträger mit wenigstens einem Paar von Nuten bereitgestellt sein, welche in Längsrichtung der Anordnung gegeneinander versetzt sind, vorzugsweise zwei derartige Paare von Nuten, welche bezüglich der Breitenrichtung gegeneinander versetzt sind. Durch dieses Vorsehen mehrerer Nuten in dem Querträger können weitere mögliche Montagepositionen des Krans an dem Hilfsrahmen bewerkstelligt werden, was die Flexibilität der erfindungsgemäßen Anordnung weiter erhöht.

Alternativ oder zusätzlich kann die wenigstens eine Nut bzw. das wenigstens eine Paar von Nuten des wenigstens einen Querträgers bezüglich der Längsrichtung der Anordnung gegenüber einer Mittellinie des Querträgers versetzt sein. Indem in dieser Ausführungsform der Querträger um 180° bezüglich einer vertikalen Achse gedreht wird, werden weitere mögliche Positionen zur Verklotzung des Krans geschaffen, welche durch den Versatz zwischen den entsprechenden Nuten und der angesprochenen Mittellinie des Querträgers bewerkstelligt werden.

In einer möglichen Ausführungsform kann der wenigstens eine Querträger an seiner Oberseite mit einem Kantblech versehen sein, welches vorzugsweise mit dem Querträger verschraubt ist und welchem die wenigstens eine Nut zugeordnet ist.

Weiterhin kann wenigstens ein weiterer Querträger vorgesehen sein, welcher an seiner Oberseite frei von Nuten ist und somit lediglich zur Stabilität der Anordnung beiträgt, jedoch nicht zur Verklotzung des Krans.

Auch hinsichtlich der Bridentaschen kann eine erhöhte Flexibilität bei der Montage des Krans erzielt werden, beispielsweise wenn diese dazu eingerichtet sind, eine Montage der Kranbriden in einer Mehrzahl von Positionen in Längsrichtung der Anordnung zu ermöglichen, insbesondere entlang eines Montagebereichs.

Wenngleich die Bridentaschen an die jeweiligen Kran-Seitenplatten beispielsweise ebenfalls angeschraubt sein könnten, so kann auch eine Ausführungsform vorgesehen sein, in welcher die Bridentaschen an jeweiligen Kran-Seitenplatten angeschweißt sind.

Weiterhin betrifft die vorliegende Erfindung ein Fahrzeug mit einem Fahrgestell, insbesondere ein Kipperfahrzeug, umfassend eine derartige erfindungsgemäße Anordnung, wobei das Fahrgestell mit einem Lochmuster zum Ermöglichen eines Anschraubens der Kran-Seitenplatten in einer Mehrzahl von Positionen versehen ist und den Kran mittels seiner Kranbriden in den Bridentaschen der Anordnung montiert und an dem wenigstens einen Querträger verklotzt ist.

Hierbei kann ein Verfahren zum Montieren des Krans in einem derartigen Fahrzeug die Schritte eines Durchführens einer Oberflächenbehandlung des Hilfsrahmens, beispielsweise umfassend ein Lackieren, eines Montierens des Hilfsrahmens an dem Fahrzeug, eines Anschraubens der Kran-Seitenplatten und des wenigstens einen Querträgers an dem Hilfsrahmen an für den vorgesehenen Kran geeigneten Positionen, und eines Montierens des Krans mittels seiner Kranbriden in den Bridentaschen sowie eines Verklotzens des Krans an dem wenigstens einen Querträger umfassen.

Weitere Merkmale und Vorteile der vorliegenden Erfindung werden aus der nachfolgenden Beschreibung einer Ausführungsform davon noch deutlicher, wenn diese zusammen mit den beiliegenden Figuren betrachtet wird. Diese zeigen im Einzelnen:
- Fig. 1: eine isometrische Ansicht einer erfindungsgemäßen Anordnung zur Montage eines Krans an einem Fahrzeug mit einem Fahrgestell;
- Fig. 2: einen Abschnitt der Anordnung aus Fig. 1 in einer Draufsicht;
- Fig. 3: Detailansichten der Kran-Seitenplatten und des Querträgers der Anordnung aus Fig. 1;
- Fig. 4: eine isometrische Ansicht der Anordnung aus Fig. 1 mit einem daran montierten Unterteil eines Krans; und
- Fig. 5: eine Detailansicht des Zustands aus Fig. 4 mit weiteren montierten Fahrzeugkomponenten.

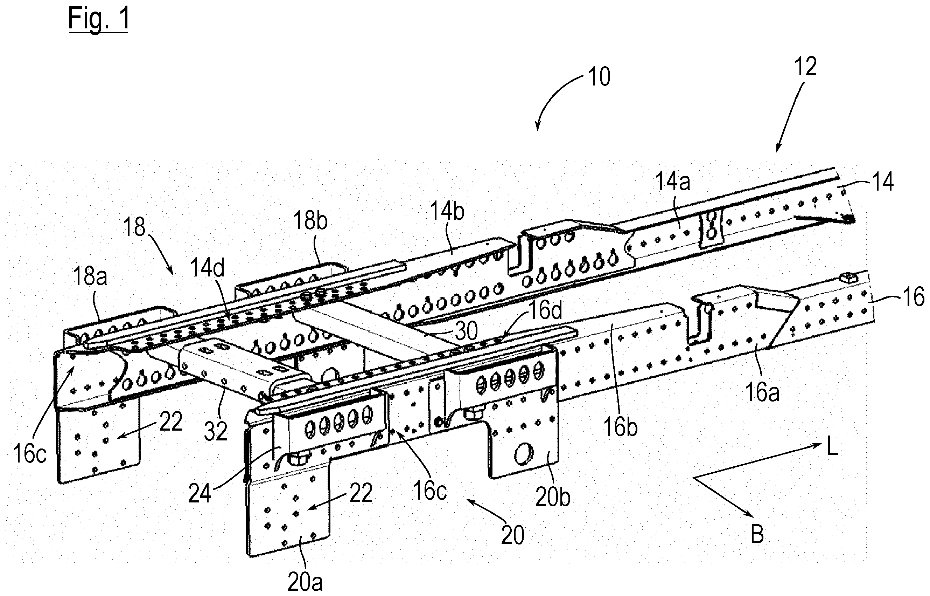

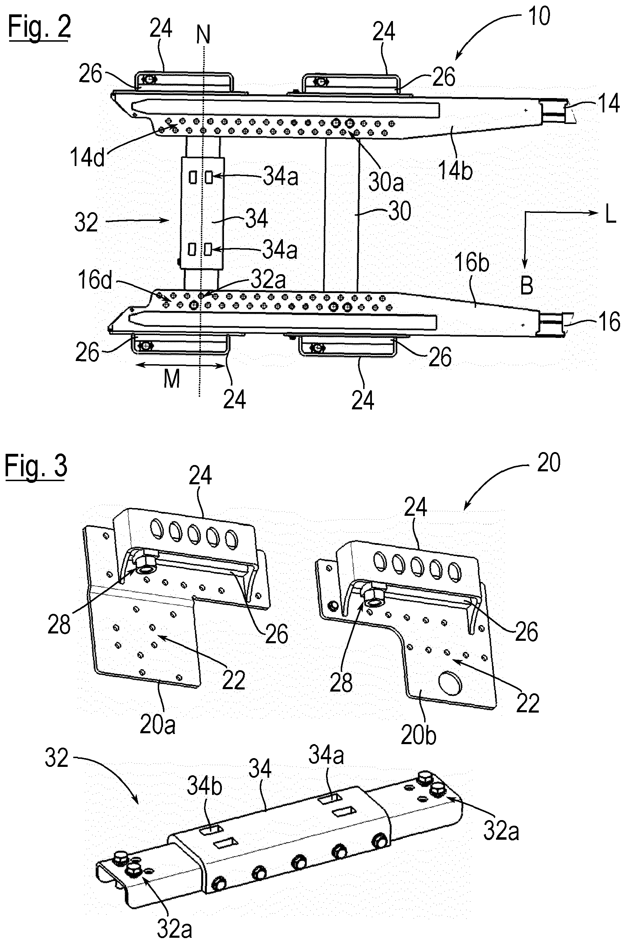

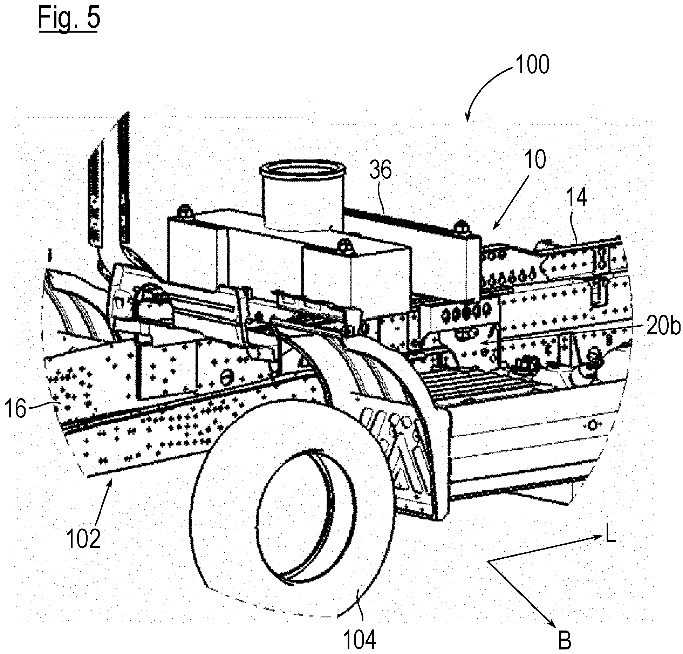

In Fig. 1 ist zunächst eine erfindungsgemäße Anordnung zur Montage eines Krans in einem Fahrzeug mit einem Fahrgestell in einer isometrischen Ansicht dargestellt und ganz allgemein mit dem Bezugszeichen 10 bezeichnet. Dieselbe Anordnung 10 ist in Fig. 2 erneut in einer Draufsicht dargestellt. Aus Gründen der Übersichtlichkeit ist an dieser Stelle auf eine Darstellung weiterer Komponenten des Fahrzeugs und insbesondere auch des Fahrgestells verzichtet worden, es wird jedoch an einigen Stellen Bezug hierauf genommen werden und auf die weiter unten beschriebene Fig. 5 verwiesen.

Die Anordnung 10 umfasst zunächst einen Hilfsrahmen 12, welcher eine Längsrichtung L sowie eine dazu senkrechte Breitenrichtung B definiert, welche einer Front-Heck-Richtung bzw. einer Breitenrichtung des mit der Anordnung 10 ausgerüsteten Fahrzeugs entsprechen.

Der Hilfsrahmen 12 umfasst zwei Längsträger 14, 16, welche wiederum jeweils einen Seitenabschnitt 14a, 16a und einen Obergurt 14b, 16b umfassen. Hierbei ist in Figur 1 zu erkennen, dass sowohl die Seitenabschnitt 14a, 16a als auch die Obergurte 14b, 16b mit jeweiligen Lochmustern versehen sind, welche mit dem Bezugszeichen 14c, 16c bzw. 14d, 16d bezeichnet sind.

Mittels der an den Seitenabschnitten 14a, 16a vorgesehenen Lochmuster 14c, 16c sind nun jeweilige Kran-Seitenplatten 18 und 20 mit den beiden Längsträgern 14, 16 an geeigneten Positionen verschraubt. Hierbei sind in der in den Figuren gezeigten Ausführungsform die beiden Kran-Seitenplatten 18, 20 jeweils zweiteilig ausgebildet und umfassen somit jeweilige erste und zweite Teile 18a, 18b bzw. 20a, 20b. Wie beispielsweise auch noch einmal aus der Detailansicht in Fig. 3 deutlich wird, sind sämtliche der Teile 18a, 18b, 20a, 20b der beiden Kran-Seitenplatten 18 und 20 mit einem breiteren oberen Abschnitt und einem schmaleren unteren Abschnitt ausgebildet, wobei sie mit den in ihren jeweiligen oberen Abschnitten vorgesehenen Lochmustern mit den beiden Längsträgern 14 und 16 verschraubt sind, während ferner in ihren unteren Abschnitten weitere Lochmuster zur Verbindung mit dem nicht gezeigten Fahrgestell des Fahrzeugs vorgesehen sind. In den Fig. 1 und 3 sind sämtliche Lochmuster der Kran-Seitenplatten 18 und 20 einheitlich mit dem Bezugszeichen 22 bezeichnet.

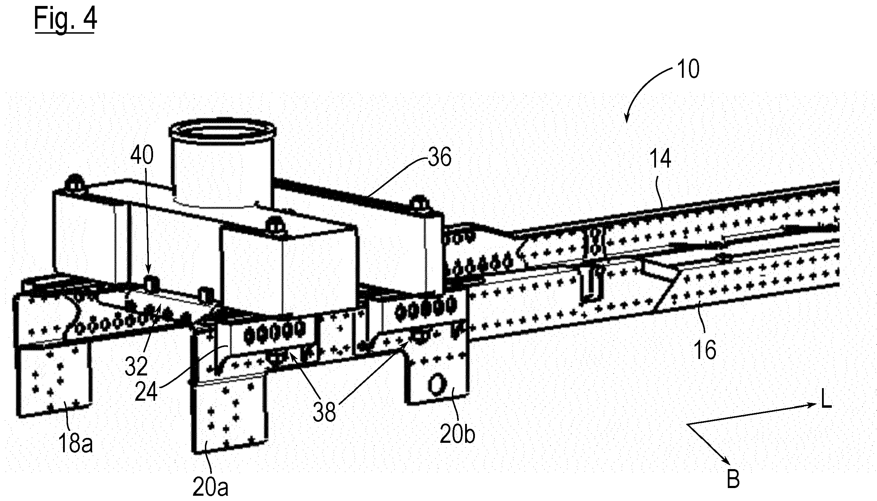

Weiterhin ist in den Figuren 1 bis 3 zu erkennen, dass jedes der Teile 18a, 18b, 20a, 20b der Kran-Seitenplatten 18 und 20 mit einer jeweiligen Bridentasche 24 ausgestattet ist, welche mit den jeweiligen Teilen 18a, 18b, 20a, 20b in einem der Montage vorhergehenden Schritt verschweißt worden sind. Wie insbesondere in Fig. 2 und 3 zu erkennen ist, sind die einzelnen Bridentaschen 24 an ihren Unterseiten mit angeschweißten Flacheisen 26 versehen, welche zur in Fig. 1 und 3 angedeuteten Abstützung einer Auflegescheibe 26 zur Montage der in den Figuren 1 und 2 nicht dargestellten Kranbriden vorgesehen sind. Ferner ist zu erkennen, dass die Bridentaschen 24 entlang der Längsrichtung L einen Montagebereich M definieren, innerhalb welchem eine freie Positionierung der entsprechenden Kranbriden ermöglicht ist, wie später anhand der Fig. 4 noch deutlicher werden wird.

Weiterhin sind in den Figuren 1 und 2 zwei Querträger 30 und 32 dargestellt, welche jeweils mit den in den Obergurten 14b und 16b der Längsträger 14 und 16 vorgesehenen Lochmuster 14d bzw. 16d verschraubt sind. Hierbei ist zu erkennen, dass die beiden Lochmuster 14d und 16d jeweils zwei im Wesentlichen in der Längsrichtung L parallel zueinander verlaufenden und versetzt angeordneten Reihen von Löchern umfassen, wobei die Löcher der einen Reihe jeweils mittig zwischen den Löchern der anderen Reihe angeordnet sind.

Indem nun die Querträger 30 und 32 ebenfalls mit entsprechenden Lochmustern 30a, 32a, insbesondere Lochpaaren auf gleicher Höhe in Längsrichtung L, versehen sind, kann jeder der Querträger 30 und 32 entweder an der in Breitenrichtung B äußeren oder inneren Reihe der Lochmuster 14d und 16d verschraubt werden, so dass hier eine hohe Flexibilität hinsichtlich der Positionierung der Querträger 30 und 32 erzielt werden kann. Wenn beispielsweise der Abstand der einzelnen Löcher innerhalb einer der Reihen der Lochmuster 14d und 16d in Längsrichtung zu den jeweils benachbarten Löchern 50 mm beträgt, so kann durch das Vorsehen in beiden Reihen eine Positionierung der Querträger 30 und 32 auf eine Genauigkeit von 25 mm erzielt werden.

Wie insbesondere in Figur 2 zu erkennen ist, dient der Querträger 30 lediglich zur Verbindung der beiden Längsträger 14 und 16 des Hilfsrahmens 12 und zur Aufnahme von Kräften, wohingegen der in Fig. 3 erneut in einer Detailansicht dargestellte Querträger 32 an seiner Oberseite mit einem Kantblech 34 versehen ist, welches zwei Paare von Nuten 34a und 34b zur Verklotzung des Krans aufweist. Dieses Kantblech 34 ist mit dem Querträger 32 ebenfalls verschraubt und indem die Paare von Nuten 34a und 34b bezüglich der Längsrichtung L gegenüber einer Mittellinie N des Querträgers 32 versetzt angeordnet sind, kann durch eine Drehung des Querträgers 32 um eine vertikal verlaufende Achse eine weitere zusätzliche Positionsunterscheidung für die jeweiligen Nuten erreicht werden.

Indem diese geeignet auf dem Kantblech 34 positioniert werden, kann in dem oben genannten Beispiel eine weitere Halbierung der Abstände zwischen möglichen Montagepositionen erzielt werden, so dass letzten Endes die möglichen Verklotzungspunkte nur noch 12,5 mm in Längsrichtung L auseinanderliegen.

Da sowohl die Kran-Seitenplatten 18 und 20 als auch die Querträger 30 und 32 jeweils mit den Hilfsrahmen 12 und insbesondere den beiden Längsträgern 14 und 16 über die oben angesprochenen Lochmuster verschraubt werden, sind bei einer Montage des Krans keine Schweißarbeiten mehr notwendig, sodass sämtliche Oberflächenbehandlungen der angesprochenen Komponenten bereits vor Montage des Krans abgeschlossen sein können und nicht mehr nachgearbeitet werden müssen. Auf diese Weise wird zusätzlich zur bereits angesprochenen hohen Flexibilität der Anordnung 10 hinsichtlich der möglichen Montagepositionen der Kran-Seitenplatten 18 und 20 sowie der Querträger 30 und 32 durch die Lochmuster auch noch eine vereinfachte Montage des Krans ermöglicht und die Korrosionsanfälligkeit der Anordnung 10 verringert.

Ansichten, in denen ein Kran 36 mit der Anordnung 10 verbunden ist, sind in den Fig. 4 und 5 dargestellt, in denen jeweils ein unterer Montagebereich des Krans 36 schematisch in montiertem Zustand dargestellt ist. Hierbei ist zu erkennen ist, dass die vier Kranbriden 38 in den jeweiligen Bridentaschen 24 verschraubt sind, wobei eine Positionierung entlang der Längsrichtung L im Rahmen des Montagebereichs M frei ist. Ebenfalls sind in Fig. 5 die zur Verklotzung des Krans 36 in den Nuten 34a, 34b des Querträgers 32 dienenden Gegenelemente 40 darin einliegend zu erkennen.

Zuletzt sei noch auf Fig. 5 verwiesen, in welcher verglichen mit Fig. 4 weitere Komponenten des entsprechenden Fahrzeugs 100 dargestellt sind, beispielsweise das Fahrgestell 102, mit welchem die Kran-Seitenplatten 18, 20 ebenfalls verschraubt sind, sowie ein Vorderrad 104 zur Verdeutlichung der Positionierung des Krans 36 bezüglich der Längsrichtung L des Fahrzeug 100, welche mit der Längsrichtung L der Anordnung 10 zusammenfällt.

## Patentansprüche

1. Anordnung (10) zur Montage eines Krans (36) an einem Fahrzeug (100) mit einem Fahrgestell (102), umfassend:
- einen Hilfsrahmen (12), welcher eine Längsrichtung (L) der Anordnung (10) sowie eine dazu senkrechte Breitenrichtung (B) definiert und zwei Längsträger (14, 16) umfasst, welche wiederum jeweils einen Seitenabschnitt (14a, 16a) und einen Obergurt (14b, 16b) umfassen und dazu eingerichtet sind, sich im Wesentlichen entlang einer Längsrichtung (L) des Fahrzeugs (100) zu erstrecken;
- zwei Kran-Seitenplatten (18, 20), welche jeweils dazu eingerichtet sind, mit einem der Längsträger (14, 16) und ggf. dem Fahrgestell (102) verbunden zu sein und wenigstens zwei Bridentaschen (24) zum Montieren von Kranbriden (38) des Krans (36) umfassen;
wobei die Seitenabschnitte (14a, 16a) der Längsträger (14, 16) des Hilfsrahmens (12) und die Kran-Seitenplatten (18, 20) jeweilige Lochmuster (14c, 16c, 22) umfassen, mittels welcher ein Anschrauben der Kran-Seitenplatten (18, 20) an den Längsträgern (14, 16) an einer Mehrzahl von Positionen ermöglicht ist; und
- wenigstens einen Querträger (32) zur Verklotzung des Krans (36), welcher zu diesem Zweck an seiner Oberseite mit wenigstens einer Nut (34a, 34b) versehen ist, welche zur Aufnahme von wenigstens einem an dem Kran (36) bereitgestellten Gegenelement (40) versehen ist;
wobei die Obergurte (14b, 16b) der Längsträger (14, 16) des Hilfsrahmens (12) und der wenigstens eine Querträger (32) jeweilige Lochmuster (14d, 16d, 32a) umfassen, mittels welcher ein Anschrauben des wenigstens einen Querträgers (32) an den Längsträgern (14, 16) an einer Mehrzahl von Positionen ermöglicht ist,
**dadurch gekennzeichnet, dass**
wenigstens eine der Kran-Seitenplatten (18, 20) mehrteilig ausgebildet ist, wobei jeder der Teile (18a, 18b, 20, 20b) wenigstens eine der Bridentaschen (24) umfasst.

2. Anordnung (10) nach Anspruch 1,
wobei die Lochmuster (14d, 16d) der Obergurte (14b, 16b) jeweils wenigstens zwei im Wesentlichen in der Längsrichtung (L) der Anordnung (10) parallel zueinander verlaufende und versetzt angeordnete Reihen von Löchern umfassen, und
der wenigstens eine Querträger (32) an beiden Seiten wenigstens zwei auf die Reihen abgestimmte Lochgruppen derart umfasst, dass die entsprechenden Löcher parallel und bezüglich der Längsrichtung (L) der Anordnung (10) zueinander ausgerichtet sind.

3. Anordnung (10) nach Anspruch 2,
wobei in den Obergurten (14b, 16b) zwei Reihen von Löchern vorgesehen sind, wobei die Löcher der einen Reihe jeweils mittig zwischen den Löchern der anderen Reihe angeordnet sind.

4. Anordnung (10) nach einem der vorhergehenden Ansprüche,
wobei der wenigstens eine Querträger (32) mit wenigstens einem Paar von Nuten (34a, 34b) bereitgestellt ist, welche in Längsrichtung (L) der Anordnung (10) gegeneinander versetzt sind, vorzugsweise zwei derartigen Paaren von Nuten, welche bezüglich der Breitenrichtung (B) gegeneinander versetzt sind.

5. Anordnung (10) nach einem der vorhergehenden Ansprüche,
wobei die wenigstens eine Nut bzw. das wenigstens eine Paar von Nuten (34a, 34b) des wenigstens einen Querträgers (32) bezüglich der Längsrichtung (L) der Anordnung gegenüber einer Mittellinie (N) des Querträgers (32) versetzt ist.

6. Anordnung (10) nach einem der vorhergehenden Ansprüche,
wobei der wenigstens eine Querträger (32) an seiner Oberseite mit einem Kantblech (34) versehen ist, welches vorzugsweise mit dem Querträger (32) verschraubt ist und welchem die wenigstens eine Nut (34a, 34b) zugeordnet ist.

7. Anordnung (10) nach einem der vorhergehenden Ansprüche,
wobei wenigstens ein weiterer Querträger (30) vorgesehen ist, welcher an seiner Oberseite frei von Nuten ist.

8. Anordnung (10) nach einem der vorhergehenden Ansprüche,
wobei die Bridentaschen (24) dazu eingerichtet sind, eine Montage der Kranbriden (38) in einer Mehrzahl von Positionen in Längsrichtung (L) der Anordnung zu ermöglichen, insbesondere entlang eines Montagebereichs (M).

9. Anordnung (10) nach einem der vorhergehenden Ansprüche,
wobei die Bridentaschen (24) an die jeweiligen Kran-Seitenplatten (18, 20) angeschweißt sind.

10. Fahrzeug (100) mit einem Fahrgestell (102), insbesondere Kipperfahrzeug, umfassend eine Anordnung (10) nach einem der vorhergehenden Ansprüche, wobei
das Fahrgestell (102) mit einem Lochmuster zum Ermöglichen eines Anschraubens der Kran-Seitenplatten (18, 20) an einer Mehrzahl von Positionen versehen ist und
ein Kran (36) mittels seiner Kranbriden (38) in den Bridentaschen (24) der Anordnung (10) montiert und an dem wenigstens einen Querträger (32) verklotzt ist.

11. Verfahren zum Montieren des Krans (36) in dem Fahrzeug (100) nach Anspruch 10, umfassend die Schritte:
- Durchführen einer Oberflächenbehandlung des Hilfsrahmens (12), beispielsweise umfassend ein Lackieren;
- Montieren des Hilfsrahmens (12) an dem Fahrzeug (100);
- Anschrauben der Kran-Seitenplatten (18, 20) und des wenigstens einen Querträgers (32) an dem Hilfsrahmen (12) an für den vorgesehenen Kran (36) geeigneten Positionen;
- Montieren des Krans (36) mittels seiner Kranbriden (38) in den Bridentaschen (24) und Verklotzen des Krans (36) an dem wenigstens einen Querträger (32).

## Claims

1. Arrangement (10) for mounting a crane (36) on a vehicle (100) having a chassis (102), comprising:
- a subframe (12) which defines a longitudinal direction (L) of the arrangement (10) and a width direction (B) perpendicular thereto and comprises two longitudinal beams (14, 16) which comprise in turn in each case a lateral portion (14a, 16a) and an upper flange (14b, 16b) and are configured to extend substantially along a longitudinal direction (L) of the vehicle (100);
- two crane side plates (18, 20) which are configured in each case to be connected to one of the longitudinal beams (14, 16) and, where applicable, the chassis (102) and comprise at least two bracket pockets (24) for mounting crane brackets (38) of the crane (36);
wherein the lateral portions (14a, 16a) of the longitudinal beams (14, 16) of the subframe (12) and the crane side plates (18, 20) comprise respective hole patterns (14c, 16c, 22) by means of which a screwing of the crane side plates (18, 20) on the longitudinal beams (14, 16) at a plurality of positions is enabled; and
- at least one cross beam (32) for wedging the crane (36), which is provided for this purpose on its upper side with at least one groove (34a, 34b), which is provided to receive at least one mating element (40) provided on the crane (36);
wherein the upper flanges (14b, 16b) of the longitudinal beams (14, 16) of the subframe (12) and the at least one cross beam (32) comprise respective hole patterns (14d, 16d, 32a), by means of which a screwing of the at least one cross beam (32) on the longitudinal beams (14, 16) at a plurality of positions is enabled,
**characterised in that**
at least one of the crane side plates (18, 20) is formed in multiple parts, wherein each of the parts (18a, 18b, 20, 20b) comprises at least one of the bracket pockets (24).

2. Arrangement (10) according to Claim 1,
wherein the hole patterns (14d, 16d) of the upper flanges (14b, 16b) comprise in each case at least two rows of holes arranged running parallel to one another and offset substantially in the longitudinal direction (L) of the arrangement (10) and the at least one cross beam (32) comprises on both sides at least two groups of holes adapted to the rows in such a manner that the corresponding holes are aligned parallel and in relation to the longitudinal direction (L) of the arrangement (10) relative to one another.

3. Arrangement (10) according to Claim 2,
wherein two rows of holes are provided in the upper flanges (14b, 16b), wherein the holes of one row are arranged in each case centrally between the holes of the other row.

4. Arrangement (10) according to any one of the preceding claims,
wherein the at least one cross beam (32) is provided with at least one pair of grooves (34a, 34b) which are arranged offset with respect to one another in the longitudinal direction (L) of the arrangement (10), preferably two such pairs of grooves which are offset with respect to one another in relation to the width direction (B).

5. Arrangement (10) according to any one of the preceding claims,
wherein the at least one groove or the at least one pair of grooves (34a, 34b) of the at least one cross beam (32) is offset with respect to a centre line (N) of the cross beam (32) in relation to the longitudinal direction (L) of the arrangement.

6. Arrangement (10) according to any one of the preceding claims,
wherein the at least one cross beam (32) is provided on its upper side with an edge plate (34) which is preferably screwed to the cross beam (32) and to which the at least one groove (34a, 34b) is assigned.

7. Arrangement (10) according to any one of the preceding claims,
wherein at least one further cross beam (30) is provided which is free of grooves on its upper side.

8. Arrangement (10) according to any one of the preceding claims,
wherein the bracket pockets (24) are configured to enable a mounting of the crane brackets (38) in a plurality of positions in the longitudinal direction (L) of the arrangement, in particular along a mounting region (M).

9. Arrangement (10) according to any one of the preceding claims,
wherein the bracket pockets (24) are welded onto the respective crane side plates (18, 20).

10. Vehicle (100) having a chassis (102), in particular tipping vehicle, comprising an arrangement (10) according to any one of the preceding claims, wherein
the chassis (102) is provided with a hole patter to enable screwing on of the crane side plates (18, 20) at a plurality of positions and
a crane (36) is mounted by means of its crane brackets (38) in the bracket pockets (24) of the arrangement (10) and is wedged on the least one cross beam (32).

11. Method for mounting the crane (36) in the vehicle (100) according to Claim 10, comprising the steps:
- Performing a surface treatment of the subframe (12), for example, comprising a coating;
- Mounting the subframe (12) on the vehicle (100);
- Screwing on the crane side plates (18, 20) and the at least one cross beam (32) on the subframe (12) at positions suitable for the provided crane (36);
- Mounting the crane (36) by means of its crane brackets (38) in the bracket pockets (24) and wedging the crane (36) on the at least cross beam (32).

## Revendications

1. Ensemble (10) pour le montage d'une grue (36) sur un véhicule (100) avec un châssis (102), comprenant :
- un faux-châssis (12), lequel définit une direction longitudinale (L) de l'ensemble (10) ainsi qu'une direction de largeur (B) perpendiculaire à celle-ci et comprend deux longerons (14, 16), lesquels comprennent eux-mêmes respectivement une section latérale (14a, 16a) et une membrure supérieure (14b, 16b) et sont conçus pour s'étendre sensiblement le long d'une direction longitudinale (L) du véhicule (100) ;
- deux plaques latérales de grue (18, 20), lesquelles sont conçues respectivement pour être reliées à l'un des longerons (14, 16) et éventuellement au châssis (102) et comprennent au moins deux poches de bride (24) pour le montage de brides de grue (38) de la grue (36) ;
dans lequel les sections latérales (14a, 16a) des longerons (14, 16) du faux-châssis (12) et les plaques latérales de grue (18, 20) comprennent des motifs de trou (14c, 16c, 22) respectifs, au moyen desquels un vissage des plaques latérales de grue (18, 20) sur les longerons (14, 16) est permis dans une pluralité de positions ; et
- au moins une traverse (32) pour le calage de la grue (36), laquelle est pourvue à cet effet sur sa face supérieure d'au moins une rainure (34a, 34b), laquelle est prévue pour la réception d'au moins un contre-élément (40) fourni sur la grue (36) ;
dans lequel les membrures supérieures (14b, 16b) des longerons (14, 16) du faux-châssis (12) et l'au moins une traverse (32) comprennent des motifs de trou (14d, 16d, 32a) respectifs, au moyen desquels un vissage de l'au moins une traverse (32) sur les longerons (14, 16) est permis dans une pluralité de positions,
**caractérisé en ce que**
au moins une des plaques latérales de grue (18, 20) est réalisée en plusieurs parties, dans lequel chacune des parties (18a, 18b, 20, 20b) comprend au moins une des poches de bride (24).

2. Ensemble (10) selon la revendication 1,
dans lequel les motifs de trou (14d, 16d) des membrures supérieures (14b, 16b) comprennent respectivement au moins deux rangées de trous s'étendant sensiblement parallèlement l'une à l'autre dans la direction longitudinale (L) de l'ensemble (10) et disposées de manière décalée, et
l'au moins une traverse (32) comprend sur les deux faces au moins deux groupes de trous adaptés aux rangées, de telle sorte que les trous correspondants sont orientés les uns par rapport aux autres parallèlement et par rapport à la direction longitudinale (L) de l'ensemble (10).

3. Ensemble (10) selon la revendication 2,
dans lequel deux rangées de trous sont prévues dans les membrures supérieures (14b, 16b), dans lequel les trous d'une des rangées sont disposés respectivement de manière centrale entre les trous de l'autre rangée.

4. Ensemble (10) selon l'une quelconque des revendications précédentes,
dans lequel l'au moins une traverse (32) est fournie avec au moins une paire de rainures (34a, 34b), lesquelles sont décalées l'une de l'autre dans la direction longitudinale (L) de l'ensemble (10), de préférence deux paires de ce type de rainures, lesquelles sont décalées l'une de l'autre par rapport à la direction de largeur (B).

5. Ensemble (10) selon l'une quelconque des revendications précédentes,
dans lequel l'au moins une rainure ou l'au moins une paire de rainures (34a, 34b) de l'au moins une traverse (32) est décalée par rapport à la direction longitudinale (L) de l'ensemble par rapport à une ligne médiane (N) de la traverse (32).

6. Ensemble (10) selon l'une quelconque des revendications précédentes,
dans lequel l'au moins une traverse (32) est pourvue sur sa face supérieure d'une tôle pliée (34), laquelle de préférence est vissée à la traverse (32) et à laquelle est associée l'au moins une rainure (34a, 34b).

7. Ensemble (10) selon l'une quelconque des revendications précédentes,
dans lequel au moins une autre traverse (30) est prévue, laquelle est exempte de rainures sur sa face supérieure.

8. Ensemble (10) selon l'une quelconque des revendications précédentes,
dans lequel les poches de bride (24) sont conçues pour permettre un montage des brides de grue (38) dans une pluralité de positions dans la direction longitudinale (L) de l'ensemble, en particulier le long d'une zone de montage (M).

9. Ensemble (10) selon l'une quelconque des revendications précédentes,
dans lequel les poches de bride (24) sont soudées aux plaques latérales de grue (18, 20) respectives.

10. Véhicule (100) avec un châssis (102), en particulier véhicule à benne basculante, comprenant un ensemble (10) selon l'une quelconque des revendications précédentes, dans lequel
le châssis (102) est pourvu d'un motif de trou pour permettre un vissage des plaques latérales de grue (18, 20) dans une pluralité de positions et
une grue (36) est montée dans les poches de bride (24) de l'ensemble (10) au moyen de ses brides de grue (38) et calée sur l'au moins une traverse (32).

11. Procédé pour le montage de la grue (36) dans le véhicule (100) selon la revendication 10, comprenant les étapes :
- de mise en oeuvre d'un traitement de surface du faux-châssis (12), par exemple comprenant un vernissage ;
- de montage du faux-châssis (12) sur le véhicule (100) ;
- de vissage des plaques latérales de grue (18, 20) et de l'au moins une traverse (32) sur le faux-châssis (12) dans des positions adaptées à la grue (36) prévue ;
- de montage de la grue (36) dans les poches de bride (24) au moyen de ses brides de grue (38) et calage de la grue (36) sur l'au moins une traverse (32).
